(19)

Europäisches Patentamt
European Patent Office
Office européen des brevets

(11) **EP 3 704 518 B1**

(12) **EUROPÄISCHE PATENTSCHRIFT**

(45) Veröffentlichungstag und Bekanntmachung des Hinweises auf die Patenterteilung:
**19.02.2025   Patentblatt 2025/08**

(21) Anmeldenummer: **18795390.6**

(22) Anmeldetag: **22.10.2018**

(51) Internationale Patentklassifikation (IPC):
**G06N 3/00** (2023.01)      **G01W 1/10** (2006.01)
**F03D 80/40** (2016.01)      **F03D 7/04** (2006.01)

(52) Gemeinsame Patentklassifikation (CPC):
**G01W 1/10; F03D 7/046; F03D 80/40; G06N 20/00;**
F05B 2260/821; F05B 2260/84; Y02E 10/72

(86) Internationale Anmeldenummer:
**PCT/EP2018/078906**

(87) Internationale Veröffentlichungsnummer:
**WO 2019/086287 (09.05.2019 Gazette 2019/19)**

(54) **VERFAHREN ZUR VORHERSAGE EINER WAHRSCHEINLICHKEIT EINER DROSSELUNG UND/ ODER ABSCHALTUNG EINER WINDKRAFTANLAGE AUFGRUND EINES VORHERGESAGTEN EISANSATZES**

METHOD FOR FORECASTING A PROBABILITY OF THROTTLING AND/OR SHUTDOWN OF A WIND TURBINE BASED ON PREDICTED ICE BUILDUP

PROCÉDÉ DE PRÉDICTION D'UNE PROBABILITÉ D'ÉTRANGLEMENT ET/OU D'ARRÊT D'UNE ÉOLIENNE EN RAISON D'UNE APPROCHE DE GLACE PRÉDITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **30.10.2017   DE 102017125457**

(43) Veröffentlichungstag der Anmeldung:
**09.09.2020   Patentblatt 2020/37**

(73) Patentinhaber: **VC VIII Polytech Holding ApS 6740 Bramming (DK)**

(72) Erfinder:
• **SCHAUß, Thomas 82205 Gilching (DE)**
• **SCHMID, Markus 80636 München (DE)**

(74) Vertreter: **Zacco Denmark A/S Arne Jacobsens Allé 15 2300 Copenhagen S (DK)**

(56) Entgegenhaltungen:
CN-A- 103 603 776      DE-A1- 102015 122 932
US-A1- 2017 058 871

• **MINISTERIUM DES INNERN DES LANDES NORDRHEIN-WESTFALEN ET AL: "HSMBI Inhalt : Historisch: Grundsätze für Planung und Genehmigung von Windkraftanlagen (WKA-Erl.) Gem. RdErl. d. Ministeriums für Bauen und Verkehr - VI A 1 - 901.3/202 -, d. Ministeriums für Umwelt und Naturschutz, Landwirtschaft und Verbraucherschutz - VII 8 - 30.04.04 - u. d. Ministeriums für Wir", 21 October 2005 (2005-10-21), pages 1 - 32, XP093046073, Retrieved from the Internet <URL:https://recht. nrw.de/lmi/owa/br_bes_text?anw_nr=1& gld_nr=2&ugl_nr=2310&bes_id=8325&menu=0& sg=0&aufgehoben=J& keyword=windkraftanlagen#det0> [retrieved on 20230511]**
• **SUDHAKAR GANTASALA ET AL: "Investigating How an Artificial Neural Network Model Can Be Used to Detect Added Mass on a Non-Rotating Beam Using Its Natural Frequencies: A Possible Application for Wind Turbine Blade Ice Detection", ENERGIES, vol. 10, no. 2, 7 February 2017 (2017-02-07), CH, pages 184, XP055539722, ISSN: 1996-1073, DOI: 10.3390/en10020184**

EP 3 704 518 B1

- "Serious Games", vol. 9094, 1 January 2015, SPRINGER INTERNATIONAL PUBLISHING, Cham, ISBN: 978-3-642-15171-2, ISSN: 0302-9743, article P. DEL SAZ-OROZCO ET AL: "Development of a Power Output Forecasting Tool for Wind Farms Based in Principal Components and Artificial Neural Networks", pages: 349 - 360, XP055539711, DOI: 10.1007/978-3-319-19258-1_30

**Beschreibung**

TECHNISCHES GEBIET

Ausführungsformen der vorliegenden Offenbarung betreffen ein Verfahren zur Erstellung eines Prädiktionsmodells von Eisansatz an Windkraftanlagen sowie die Verwendung des Verfahrens zum Erstellen einer Ertragsprognose.

STAND DER TECHNIK

Rotorblätter von Windkraftanlagen sind den Witterungsbedingungen der Umgebung ungeschützt ausgesetzt. An bestimmten Standorten kann bei entsprechend niedrigen Umgebungstemperaturen und ausreichend hoher Luftfeuchte bzw. bei auftretendem Niederschlag Eis an den Rotorblättern angelagert werden. Mit zunehmender Größe der Rotorblätter von Windkraftanlagen nimmt deren Oberfläche zu, so dass auch die Gefahr zur Anlagerung von Eis, d. h. der Ausbildung eines Eisansatzes an den Rotorblättern, zunimmt.

Eisanlagerungen stellen einerseits eine potentielle Gefahr für die Umgebung der Windkraftanlage dar, da bei einem Abwurf des Eisansatzes - im Betrieb oder im Stillstand der Anlage - die abgeworfenen Eisstücke Personen und Gegenstände im Abwurfradius gefährden können. Andererseits kann sich insbesondere bei ungleichmäßiger Anlagerung von Eis auch eine Unwucht des Rotors der Windkraftanlage ergeben, was im Betrieb der Windkraftanlage zu Schäden führen kann. Des Weiteren kann eine andauernde Eisanlagerung zum Stoppen der Gesamtanlage führen. Dies geht normalerweise mit Ertragsverlusten und wirtschaftlichen Nachteilen einher.

Es ist bekannt, Daten einer Windkraftanlage auszuwerten, um auf die Gefahr einer bereits stattgefundenen Anlagerung von Eis zu schließen. Die DE 10 2005 016 524 A1 offenbart ein Verfahren zum Erkennen von Eis an einer Windturbine, bei welchem sowohl meteorologische Bedingungen überwacht werden, die im Zusammenhang mit Vereisungszuständen stehen, und auch eine oder mehrere physikalische, charakteristische Größen der Windkraftanlage im Betrieb überwacht werden, die auf eine Massenveränderung der Rotorblätter der Windkraftanlage schließen lassen.

Des Weiteren basieren im Stand der Technik Ertragsprognosen gewöhnlich auf Wettermodellen. Der Ertrag einer Windkraftanlage wird hierbei abhängig von erwarteter Windgeschwindigkeit, Windrichtung, Temperatur, Luftfeuchte, etc. zusammen mit relevanten Anlagenparametern (v.a. Leistungskurve) bestimmt. Zum Teil werden auch historische Daten verwendet um ein genaueres Modell für eine Windkraftanlage zu bestimmen. Zudem können geplante Wartungseinsätze in die Ertragsprognose aufgenommen werden. Eine dedizierte Verwendung von Vereisungsvorhersagen wird in der Regel nicht einbezogen.

Die US 2012/0226485 A1 beschreibt ein Verfahren zur Vorhersage der Wahrscheinlichkeit der Bildung oder des Anwachsen von Eis an Rotorblättern von Windturbinen. Das Verfahren macht sich u.a. die historische Messung meteorologischer Daten wie Windgeschwindigkeit, Temperatur und relative Luftfeuchte zu Nutze.

Die US2014/0244188 A1 beschreibt ein Verfahren und eine Vorrichtung zur Vorhersage der Leistung einer Windkraftanlage in einem Windpark wobei ein korrigierter Datensatz, der auf Umgebungsdaten beruht, die von einem Sensor in einem Windpark gesammelt werden, verwendet werden, um ein Wettervorhersagemodell zu verbessern.

Die CN 103 603 776 B offenbart ein Verfahren zur Vorhersage eines Eisansatzes an Windkraftanlagen, das auf einem maschinellen Lernverfahren beruht, und sowohl aktuelle und historische meteorologische Daten, als auch aktuelle und historische Eisansatzdaten verwendet.

Die US 2017/058871 A1 offenbart ein Verfahren zum Verhindern eines frühzeitigen Abschaltens einer Windkraftanlage wegen Eisansatzes. Bei einer Detektion von Eisansatz wird die Anlage gedrosselt.

In Windparks kommt es gerade im Winter immer wieder zu Vereisungsfällen bei z.B. Rotorblättern der einzelnen Windkraftanlagen. Oftmals müssen Windkraftanlagen in Windparks daraufhin gestoppt werden. Dies führt zu Ertragsausfällen bei den Windparkbetreibern durch eine verminderte Verfügbarkeit der Anlagen.

ZUSAMMENFASSUNG DER ERFINDUNG

Ausführungsformen der vorliegenden Offenbarung stellen ein Verfahren einer Prädiktion von Eisansatz an Windkraftanlagen Windkraftanlagen, sowie die Verwendung des Verfahrens zur Erstellung einer Ertragsprognose bereit.

Gemäß einer Ausführungsform wird ein Verfahren einer Prädiktion von Eisansatz an Windkraftanlagen angegeben, mit Erfassen von aktuellen Eisansatzdaten an zumindest einer Windkraftanlage, wobei die aktuellen Eisansatzdaten mittels zumindest einem Vibrationssensor oder zumindest einem Beschleunigungssensor ermittelt werden; Verwenden von aktuellen und historischen meteorologischen Daten für den Standort der zumindest einen Windkraftanlage; Verwenden der aktuellen Eisansatzdaten und von historischen Eisansatzdaten und Prädiktion eines Eisansatzes basierend auf einem maschinell erlernten Modell, wobei die Prädiktion des Eisansatzes eine Unsicherheit beinhaltet; und Vorhersagen einer Wahrscheinlichkeit zu einem Drosseln und/oder einem Abschalten der zumindest einen Windkraftanlage, wobei die Wahrscheinlichkeit zum Drosseln und/oder Abschalten der zumindest einen Windkraftanlage sich nach dem für die zumindest eine Windkraftanlage vorhergesagten Eisansatz richtet, wobei der Schritt des Vorhersagens der Wahrscheinlichkeit zum Drosseln und/oder Abschalten der zumindest einen Windkraftanlage umfasst, dass die mindestens eine Windkraftanlage gedrosselt wird, wenn der vorhergesagte Eisansatz an der mindestens einen Windkraftanlage einen Schwellenwert $S_D$ erreicht, dass die mindestens eine Windkraftanlage abgeschaltet wird, wenn der vorhergesagte Eisansatz an der mindestens einen Windkraftanlage einen Schwellenwert $S_A$ erreicht, wobei der Schwellenwert $S_A$ größer ist als der Schwellenwert $S_D$, und dass weitere Parameter in die Vorhersage der Wahrscheinlichkeit zum Drosseln und/oder Abschalten der zumindest einen Windkraftanlage miteinbezogen werden, wobei die weiteren Parameter Materialspezifikationen des Rotorblatts umfassen.

Gemäß weiteren Ausführungsformen wird eine Wahrscheinlichkeit einer Drosselung und/oder einer Abschaltung basierend auf der Prädiktion des Eisansatzes und auf standortbedingten Rahmenbedingungen berechnet. Gemäß weiteren Ausführungsformen wird das maschinell erlernte Modell nach einem Verfahren zur Erstellung eines Prädiktionsmodells von Eisansatz an Windkraftanlagen erstellt, welches Verfahren Folgendes umfasst: Erfassen von aktuellen Eisansatzdaten an zumindest einer Windkraftanlage, wobei die aktuellen Eisansatzdaten mittels zumindest einem Vibrationssensor oder zumindest einem Beschleunigungssensor ermittelt werden; Verwenden von aktuellen und historischen meteorologischen Daten für den Standort der zumindest einen Windkraftanlage, wobei die aktuellen und historischen meteorologischen Daten mindestens zwei der Folgenden umfassen: Windgeschwindigkeit, Windrichtung, Temperatur, Luftfeuchte, Luftdruck und/oder weitere wetterbezogene Parameter; Einspeisen der aktuellen Eisansatzdaten und von historischen Eisansatzdaten der zumindest einen Windkraftanlage und Einspeisen der aktuellen und historischen meteorologischen Daten in ein maschinelles Lernverfahren; und Erstellen eines Prädiktionsmodells basierend auf dem maschinellen Lernverfahren. Gemäß weiteren Ausführungsformen enthalten die meteorologischen Daten vorhergesagte meteorologische Daten. Gemäß weiteren Ausführungsformen wird eine Vereisungsstärke mit der Prädiktion vorhergesagt.

Erfindungsgemäß wird eine Verwendung der hierin beschriebenen Verfahren zum Erstellen einer Ertragsprognose für zumindest eine Windkraftanlage, insbesondere für zumindest eine Windkraftanlage eines Windparks zur Verfügung gestellt.

## KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Fig. 1A zeigt schematisch beispielhaft drei Windparks gemäß hier beschriebener Ausführungsformen;

Fig. 1B zeigt schematisch einen Windpark mit beispielhaft drei Windkraftanlagen gemäß hier beschriebener Ausführungsformen;
Fig. 2A zeigt schematisch einen Teil einer Windkraftanlage mit Rotorblättern und Sensoren gemäß hier beschriebenen Ausführungsformen;
Fig. 2B zeigt schematisch ein Rotorblatt einer Windkraftanlage mit einem Sensor gemäß hier beschriebenen Ausführungsformen;
Fig. 3 zeigt ein Ablaufdiagramm eines ersten Verfahrens gemäß hier beschriebenen Ausführungsformen;
Fig. 4 zeigt ein Ablaufdiagramm eines zweiten Verfahrens gemäß hier beschriebenen Ausführungsformen;
Fig. 5A zeigt ein Ablaufdiagramm eines Verfahrens gemäß hier beschriebenen Ausführungsformen;
Fig. 5B zeigt ein Ablaufdiagramm eines Verfahrens gemäß hier beschriebenen Ausführungsformen;
Fig. 6 zeigt schematisch einen Lichtleiter mit einem Faser-Bragg-Gitter zur Verwendung in Sensoren gemäß hier beschriebenen Ausführungsformen;
Fig. 7 zeigt schematisch einen Messaufbau für einen faseroptischen Sensor gemäß hier beschriebenen Ausführungsformen bzw. für Verfahren zur Überwachung gemäß hier beschriebenen Ausführungsformen.

In den Zeichnungen bezeichnen gleiche Bezugszeichen gleiche oder funktionsgleiche Komponenten oder Schritte.

## WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Die vorliegende Erfindung findet Anwendung zur Vorhersage einer Vereisung an Windkraftanlagen eines oder mehrerer Windparks und zur Prognose von Ertragsausfällen durch Vereisungsfälle. Eine Eisbildung an Blättern einer Windkraftanlage kann dazu führen, dass die Anlage angehalten werden muss oder weniger Erträge liefert. Dies kann vom Standort (z.B. erfordern behördliche Auflagen oft eine Abschaltung bei minimalem Eisansatz) und der Schwere der Vereisung abhängen (bei starkem Eisansatz muss die Anlage gedrosselt oder angehalten werden um starke Belastungen zu vermeiden). Eine Prädiktion des Eisansatzes ermöglicht einen genaueren Ertragsprognose und mit allen sich daraus ergebenden Vorteilen.

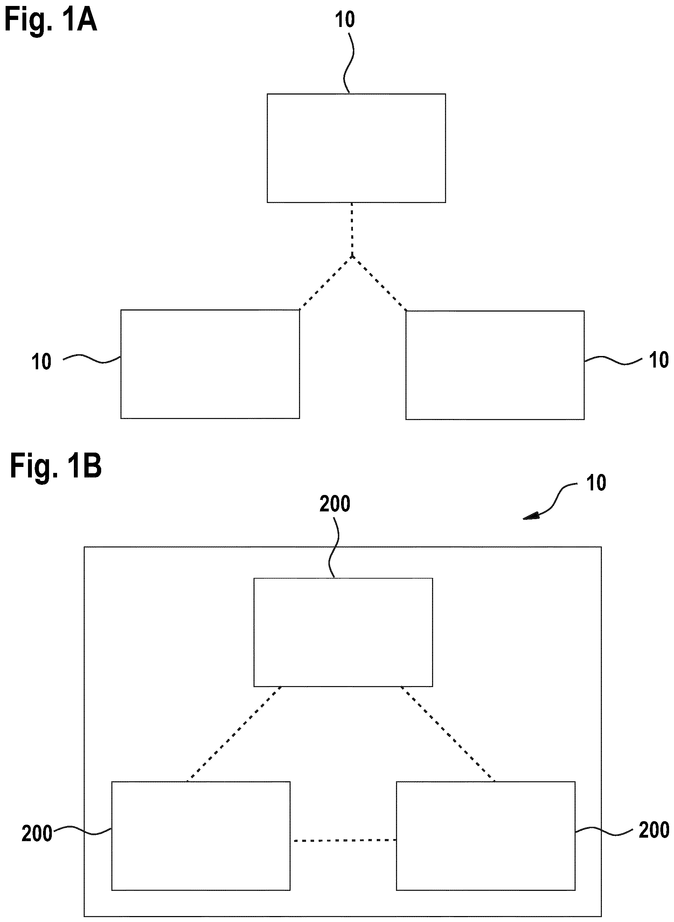

Fig. 1A zeigt schematisch beispielhaft drei Windparks 10 gemäß hier beschriebener Ausführungsformen. Gemäß beschriebener Ausführungsformen kann sich ein Verfahren auf mindestens einen oder mehrere Windparks 10 beziehen, insbesondere auf zehn oder mehr Windparks, wie z. B. auf zwanzig oder mehr Windparks. Die Daten der Windparks können zentral dokumentiert werden (gestrichelte Linien in Fig. 1A).

Fig. 1B zeigt einen Windpark 10 beispielhaft bestehend aus drei Windkraftanlagen 200. Die Windkraftanlagen 200 können, wie in Fig. 1B durch gestrichelte Linien dargestellt, unter einander vernetzt sein. Die Vernetzung kann eine gemeinsame Überwachung, Steuerung und/oder Regelung der Windkraftanlagen 200 ermöglichen. Zusätzlich können die Windkraftanlagen 200 auch einzeln überwacht, gesteuert und/oder geregelt werden. Gemäß hier beschriebenen Ausführungsformen, kann ein Windpark eine oder mehr Windkraftanlagen, insbesondere fünf oder mehr Windkraftanlagen, wie zum Beispiel zehn oder mehr Windkraftanlagen beinhalten.

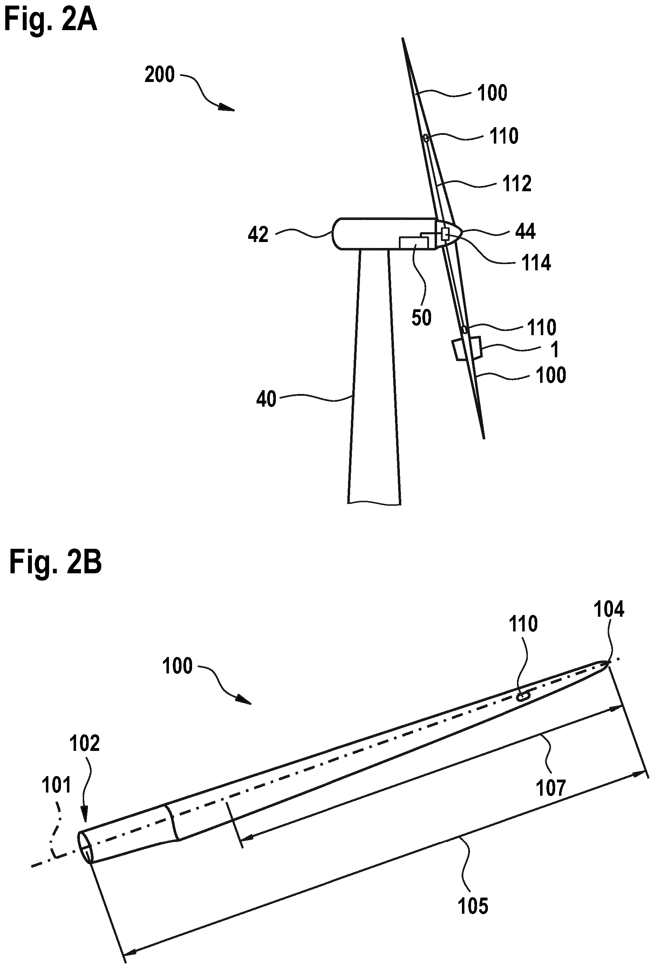

Fig. 2A zeigt beispielhaft eine Windkraftanlage 200 eines Windparks, an welchem das hierin beschriebene Verfahren zum Einsatz kommen kann. Die Windkraftanlage 200 beinhaltet einen Turm 40 und eine Gondel 42. An der Gondel 42 ist der Rotor befestigt. Der Rotor beinhaltet eine Nabe 44, an der die Rotorblätter 100 befestigt sind. Gemäß typischen Ausführungsformen hat der Rotor zumindest 2 Rotorblätter insbesondere 3 Rotorblätter. Beim Betrieb der Windkraftanlage rotiert der Rotor, d.h. die Nabe mit den Rotorblättern um eine Achse. Dabei wird ein Generator zur Stromerzeugung angetrieben. Wie in Fig. 2A dargestellt, ist zumindest ein Sensor 110 in einem Rotorblatt 100 zur Verfügung gestellt. Der Sensor ist mit einer Signalleitung mit einer Auswerteeinheit 114 verbunden. Die Auswerteeinheit 114 liefert ein Signal an eine Steuerung und/oder Regelung 50 der Windkraftanlage 200.

Im Bereich der Rotorblattspitze der Rotorblätter 100 ist ein Eisansatz 1 schematisch dargestellt. Im Rotorblatt werden mittels des Sensors 110 z.B. Vibrationen oder Beschleunigungen erfasst, der gemäß beschriebenen Ausführungsformen, als Vibrationssensor oder Beschleunigungssensor ausgestaltet sein kann. Bei dem Sensor 110 kann es sich z.B. um elektrische und/oder faseroptische Sensoren handeln. Die Sensoren können für eine Messung von z.B. Eismassen konfiguriert sein.

Fig. 2B zeigt ein Rotorblatt 100 einer Windkraftanlage. Das Rotorblatt 100 hat eine Achse 101 entlang seiner Längserstreckung. Die Länge 105 des Rotorblatts reicht von dem Blattflansch 102 zu der Blattspitze 104. Gemäß hier beschriebenen Ausführungsformen befindet sich in einem axialen bzw. radialen Bereich, das heißt einem Bereich entlang der Achse 101, ein Sensor 110.

Es ist oftmals wünschenswert, den Eisansatz an Windkraftanlagen und/oder Windparks vorherzusagen. Dies kann z.B. eine Ertragsprognose ermöglichen. Ertragsprognosen können durch genauere Vorhersagen stetig verbessert und spezifiziert werden. Ferner bieten Ertragsprognosen Vorteile beim Energiehandel als auch bei der Steuerung konventioneller Kraftwerke. Außerdem ist eine bessere Planung von Wartungseinsätzen möglich.

Im Vereisungsfall kann sich Eis u.a. an den Rotorblättern 100 anlagern. An Anlagen kann die Anlagerung von Eis bzw. der Eisansatz gemessen werden. Die Menge oder das Volumen von angelagertem Eis kann zwischen den einzelnen Anlagen variieren.

Eine Anlagerung von Eis bzw. ein Eisansatz, wie hierin verwendet, bezeichnet eine Zunahme einer Eismasse an einem Rotorblatt im Zeitverlauf. Ferner kann eine Abnahme von Eis vorliegen. Ein Anstieg einer Eismasse kann eine Anlagerung bzw. Zunahme einer Eismasse sein, also positiv sein, oder kann eine Abnahme einer Eismasse sein, also negativ sein. Ein Vereisungsfall, wie hierin verwendet, bezeichnet das Auftreten einer Anlagerung von Eis an zumindest einer Windkraftanlage eines Windparks.

Im Vereisungsfall kann die Eismasse, die sich in einem Zeitraum an den Rotorblättern von Windkraftanlagen ansetzt, bestimmt werden. Die erhaltenden Daten können als Eisansatzdaten bezeichnet werden. Eine Bestimmung einer Eismasse setzt die Messung einer geeigneten Messgröße voraus. Die Messung erfolgt mit Hilfe von Sensoren 110. Die Messgröße kann durch Transformation in eine Systemgröße S umgewandelt werden. Die Systemgröße S wird mittelbar bestimmt. Zum Beispiel kann eine Eigenschwingung eines Rotorblattes gemessen werden.

Die Systemgröße S hängt ferner mit der Masse des Rotorblattes zusammen. Alternativ oder zusätzlich hängt die Systemgröße S mit der Masse eines Eisansatzes an dem Rotorblatt zusammen. Typischerweise wird die Systemgröße S aus Messdaten von Vibrations- oder Beschleunigungsmessungen in oder an einem Rotorblatt oder mehreren der Rotorblätter erhalten. Bei Ausführungsformen wird die Messgröße im Zeitverlauf eines Erfassungszeitraums gemessen, vorzugsweise durch Messen von Vibrationen oder Beschleunigungen im Zeitverlauf des Erfassungszeitraums T. Die Messung erfolgt an oder in dem Rotorblatt.

Die Systemgröße S wird aus den Messdaten hergeleitet, vorzugsweise durch Eigenfrequenzanalyse aus den Messdaten der Vibrations- oder Beschleunigungsmessungen. Beispielweise kann ein Messsystem, welches z.B. einen aktuellen Eisansatz auf den Rotorblättern einer Windkraftanlage bestimmt, auf mehreren Windkraftanlagen (z.B. innerhalb eines oder mehrerer Windparks) verbaut werden. Die Systemgröße S lässt auf die Masse des jeweiligen Rotorblatts bzw. der jeweiligen Rotorblätter und/oder auf die Eisansatz-Masse des jeweiligen Rotorblatts bzw. der jeweiligen Rotorblätter schließen. Bei Ausführungsformen ist die Systemgröße S proportional zur Gesamtmasse des Rotorblatts und/oder proportional zu einem zusätzlichen Massenbelag des Rotorblatts. Ein zusätzlicher Massenbelag des Rotorblatts ist ein solcher Massebelag, der zu der Eigenmasse des Rotorblatts hinzukommt. Typischerweise ist die Systemgröße proportional zur Eismasse.

Die Messung der Eisanlagerung an einem Rotorblatt erfolgt in dem Erfassungszeitraum T durch Sensoren 110. Die Messdaten können fortlaufend erfasst werden. Die Eisverläufe aller, mit Messsystemen ausgerüsteten, Windkraftanagen sowie z.B. aktuelle und vorhergesagte meteorologische Daten für beispielweise alle Windkraftanlagen-Standorte und weitere Daten zur z.B. aktuellen und zukünftigen Großwetterlage, können zentral aufgezeichnet werden. Bei dem Erfassungszeitraum T handelt es sich um einen Messzeitraum, der sich mit stetiger Zeitzunahme kontinuierlich vergrößert.

Ein Prognosezeitraum Pt ist ein Zeitraum, für den eine Prognose gemacht wird. Zum Beispiel kann ein Eisansatz prognostiziert werden. Der Prognosezeitraum Pt kann den Messzeitraum beinhalten oder zumindest überlappen. Typischerweise ist der Prognosezeitraum Pt der Messzeitraum und ein zusätzlicher Tag (24 Stunden) in die Zukunft. Dies kann bedeuten, dass zu jedem Zeitpunkt einer Prognose ein Messwert der Messgröße erfasst werden kann. Dies kann ferner einen ständigen Vergleich der prognostizierten Werte und der tatsächlich gemessenen Werte ermöglichen. Das Erfassen eines Messwertes zu einer Prognose für einen bestimmten Zeitpunkt kann zeitlich später erfolgen als die Prognose an sich.

Als historische Daten, wie hierin verwendet, werden Daten bezeichnet, die in einem vergangenen Zeitraum zu einem Zeitpunkt $t_{x-k}$, vor einem bestimmten Zeitpunkt $t_x$ oder $t_{x+n}$ erfasst wurden. Historische Daten werden erfasst und gespeichert, sodass sie auch zu einem späteren Zeitpunkt bereitgestellt werden können. Historische Daten können Daten zu einem Eisansatz sein. Historische Daten können meteorologische Daten sein. Historische Daten können zu mehreren Windparks vorliegen, insbesondere zu jedem Windpark vorliegen, ferner zu mehreren Windkraftanlagen eines Windparks vorliegen z.B. zu jeder Windkraftanlage eine Windparks vorliegen.

Als aktuelle Daten, wie hierin verwendet, werden die jeweiligen Daten bezeichnet, die zu einem bestimmten Betrachtungszeitpunkt $t_x$ die erfassten Daten darstellen. Aktuelle Daten können jeweils zum Betrachtungszeitpunkt $t_x$ die jüngsten erfassten Daten sein. Aktuelle Daten können Daten zu einem Eisansatz sein. Aktuelle Daten können meteorologische Daten sein. Aktuelle Daten können zu mehreren Windparks vorliegen, insbesondere zu jedem Windpark vorliegen, ferner zu mehreren Windkraftanlagen eines Windparks vorliegen z.B. zu jeder Windkraftanlage eine Windparks vorliegen.

Als vorhergesagte Daten, wie hierin verwendet, werden Daten bezeichnet, die aus einem beliebigen Vorhersagemodell oder Prädiktionsmodell hervorgehen. Dies können z.B. vorhergesagte meteorologische Daten oder ein vorhergesagter Eisansatz sein. Vorhergesagte Daten können auf mehrere Windparks bezogen sein, insbesondere auf jeden Windpark bezogen sein, ferner auf mehrere Windkraftanlagen eines Windparks bezogen sein z.B. auf jede Windkraftanlage eine Windparks bezogen sein. Es kann ein regionaler Standortbezug der vorhergesagten Daten bestehen.

Meteorologische Daten, wie hierin verwendet, können Daten zur Windgeschwindigkeit, Windrichtung, Temperatur, Luftfeuchte, Luftdruck, und/oder weitere wetterbezogene Parameter beinhalten. Meteorologische Daten können sich auf einen oder mehrere Standorte von Windparks beziehen. Meteorologische Daten können insbesondere die Großwetterlage an einem oder mehreren Standorten einschließen. Meteorologische Daten können von einem kommerziellen Dienst bezogen werden, insbesondere vorhergesagte meteorologische Daten. Meteorologische Daten können ferner an einer Wettermessstation eines Windparks erfasst werden.

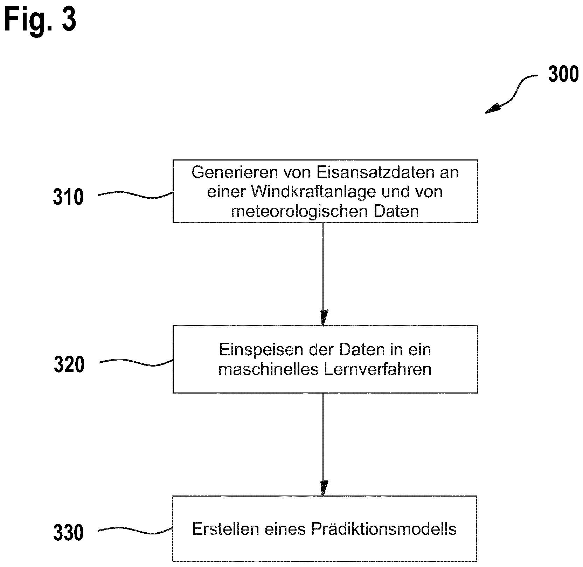

Fig. 3 zeigt ein Ablaufdiagramm eines ersten Verfahrens 300 gemäß hier beschriebenen Ausführungsformen.

In einem Schritt 310 des ersten Verfahrens werden Eisansatzdaten an zumindest einer Windkraftanlage erfasst. Gemäß hier beschriebenen Ausführungsformen, kann eine Eisansatzmessung an einer oder mehrerer Windkraftanlagen erfolgen. Die Messung kann an allen Windkraftanlagen eines Windparks erfolgen. Die Messung kann an Anlagen eines oder mehrerer Windparks erfolgen. Die Messung kann mittelbar erfolgen. Die Messung kann kontinuierlich erfolgen. Die erfassten Daten können historische Daten beinhalten. Die erfassten Daten können aktuelle Daten beinhalten.

Ferner werden meteorologische Daten des Windparks, in dem sich die zumindest eine Windkraftanlage befindet, verwendet. Es können meteorologische Daten von mehreren Windparks verwendet werden, insbesondere wenn Daten des Eisansatzes an Windkraftanlagen dieser mehreren Windparks erfasst werden. Die verwendeten meteorologischen Daten können historische Daten beinhalten. Die verwendeten meteorologischen Daten können aktuelle Daten beinhalten.

In einem Schritt 320 des ersten Verfahrens werden die erfassten Eisansatzdaten in ein maschinelles Lernverfahren eingespeist. Bei den eingespeisten Eisansatzdaten kann es sich um Daten einer Windkraftanlage handeln. Es kann sich ferner um Daten mehrerer Windkraftanlagen handeln. Es kann sich ferner um Daten aller Windkraftanlagen handeln. Es können die historischen Eisansatzdaten eingespeist werden. Es können die aktuellen Eisansatzdaten eingespeist werden.

Es werden ferner die verwendeten meteorologischen Daten in das maschinelle Lernverfahren eingespeist. Beispielsweise werden die gesamten Daten, die über einen längeren Zeitraum erfasst wurden, in einem maschinellen Lernverfahren verwendet. Bei den eingespeisten meteorologischen Daten kann es sich um Daten zu einem Windpark handeln. Es kann sich ferner um Daten zu mehreren Windparks handeln. Es können die historischen meteorologischen Daten eingespeist werden. Es können die aktuellen meteorologischen Daten eingespeist werden. Es können vorhergesagte meteorologische Daten eingespeist werden. In das maschinelle Lernverfahren können alle erfassten und verwendeten Daten aller Windkraftanlagen aller Windparks eingespeist werden.

Ein maschinelles Lernverfahren wie hierin verwendet, ist ein künstliches System, das aus Beispielen lernt und diese Lernphasen nach Beendigung verallgemeinert. Dies impliziert das Erkennen von Mustern und Gesetzmäßigkeiten in den eingespeisten oder eingegebenen Daten. Die praktische Umsetzung erfolgt mittels Algorithmen. Insbesondere handelt es sich um ein überwachtes Lernverfahren. Bei einem überwachten Lernverfahren gibt ein «Lehrer» das korrekte oder beste entsprechende Ausgabemuster/-werte zu dem Eingabemuster/-werten an. Somit kann das Modell nach wiederholter Präsentation der entsprechenden Ein- und Ausgabemuster diese Assoziation selbstständig vornehmen und generalisieren, d.h. dies auch für unbekannte, ähnliche Eingabemuster tun.

In einem Schritt 330 wird ein Prädiktionsmodell erstellt. Das Prädiktionsmodell beruht auf das maschinelle Lernverfahren. Das Prädiktionsmodell beruht z.B. auf einem überwachten Lernverfahren. Das Modell kann ein sich kontinuierlich verbesserndes, probabilistisches Modell sein. Das Prädiktionsmodell kann z.B. aus den eingespeisten Daten eine zukünftige Vereisungsstärke für eine Windkraftanlage vorhersagen. Z.B. werden historische Eisansatzmessungen sowie meteorologischen Daten verwendet um ein probabilistisches Modell zur Prädiktion des Eisansatzes an allen Anlagen zu erlernen. Dieses Modell kann verwendet werden, um auf Basis aktueller und vergangener Eisansatzmessungen und aktueller, vergangener, sowie vorhergesagter meteorologischer Daten den zukünftigen Eisansatz an allen betrachteten Windenergieanlagen zu bestimmen.

Ein Vorhersagemodell oder Prädiktionsmodell, wie hierin verwendet, kann z.B. ein numerisches datenbasiertes Vorhersagemodell sein. Das Prädiktionsmodell basiert auf dem maschinellen Lernverfahren. Mit Hilfe des Prädiktionsmodells kann aus den eingespeisten Daten z.B. der zukünftige Eisansatz für eine Windkraftanlage vorhergesagt werden. Durch das bestimmte Modell kann z.B. der zukünftigen Eisansatz aus aktuellen und historischen Daten (inklusive meteorologischer Vorhersagen) vorhersagt werden. Da Messdaten über den tatsächlichen Eisverlauf auf den Windkraftanlagen vorliegen, kann ein überwachtes Lernverfahren eingesetzt werden. Das hieraus resultierende probabilistische Modell erlaubt z.B. eine Vorhersage der Vereisungsstärke und Unsicherheit pro Windkraftanlage.

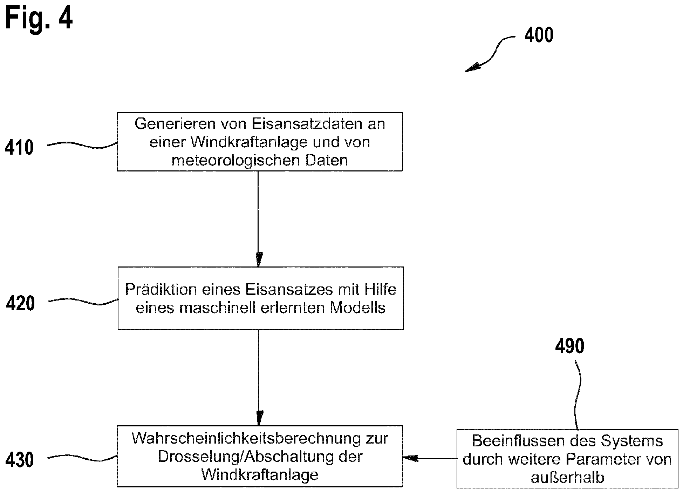

Fig. 4 zeigt ein Ablaufdiagramm eines zweiten Verfahrens 400 gemäß der Erfindung.

In einem Schritt 410 des zweiten Verfahrens werden Eisansatzdaten an zumindest einer Windkraftanlage erfasst. Erfindungsgemäß erfolgt eine Eisansatzmessung an einer oder mehrerer Windkraftanlagen. Die Messung kann an allen Windkraftanlagen eines Windparks erfolgen. Die Messung kann an Anlagen eines oder mehrerer Windparks erfolgen. Die Messung kann mittelbar erfolgen. Die Messung kann kontinuierlich erfolgen. Die erfassten Daten beinhalten historische Daten. Die erfassten Daten beinhalten aktuelle Daten.

Ferner werden meteorologische Daten des Windparks, in dem sich die zumindest eine Windkraftanlage befindet, verwendet. Es können meteorologische Daten von mehreren Windparks verwendet werden, insbesondere wenn Daten des Eisansatzes an Windkraftanlagen dieser mehreren Windparks erfasst werden. Die verwendeten meteorologischen Daten beinhalten historische Daten. Die verwendeten meteorologischen Daten beinhalten aktuelle Daten.

In einem Schritt 420 wird ein Eisansatz prädiziert. Es kann z.B. die Vereisungsstärke und/oder die Masse an zu erwartendem Eis vorhergesagt werden. Die Prädiktion beruht auf ein Prädiktionsmodell. Z.B. kann die Vorhersage des Eisansatzes auf das Prädiktionsmodell, das in Bezug auf Fig. 3 beschreiben ist, basieren. Der Eisansatz kann für einen Standort vorhergesagt werden. Der Standort kann mehrere Windparks einschließen. Der Eisansatz kann zusätzlich für einen Windpark vorhergesagt werden. Der Eisansatz kann ferner für mehrere Windkraftanlagen eines Windparks vorhergesagt werden. Der Eisansatz kann für eine Windkraftanlage eines Windparks prädiziert werden.

Die Prädiktion beinhaltet eine Unsicherheit. Diese Unsicherheit ist ein nichtnegativer Parameter, der die Streuung derjenigen Werte kennzeichnet, die der Prädiktion auf der Grundlage der benutzten Information beigeordnet ist.

In einem Schritt 430 wird eine Wahrscheinlichkeit zur Drosselung und/oder Abschaltung einer Windkraftanlage berechnet. Je nach Anlagenstandort und sich daraus ergebenden Rahmenbedingungen wird eine Wahrscheinlichkeit ermittelt, mit der die Anlage angehalten oder gedrosselt werden kann. Dies hängt z.B. von behördlichen Auflagen, dem Anlagentyp, sowie der erwarteten Vereisungsstärke ab. Die Wahrscheinlichkeit, dass eine Anlage angehalten oder gedrosselt werden kann, kann verwendet werden, um eine auf meteorologischen Daten basierende Ertragsprognose entsprechend zu korrigieren.

Die Drosselung und/oder Abschaltung beruht auf den prädizierten Eisansatz. Eine Windkraftanlage wird gedrosselt, wenn der Eisansatz an einer Anlage einen Schwellenwert $S_D$ erreicht. Ferner wird eine Windkraftanlage abgeschaltet, wenn der Eisansatz an einer Anlage einen Schwellenwert $S_A$ erreicht.

Der Schwellenwert $S_D$ wie hierin verwendet, ist ein Schwellenwert für die Menge an angelagertem Eis, der für die Systemgröße S geeignet ist und an dem die Anlage, die den Schwellenwert erreicht gedrosselt wird. Der Schwellenwert $S_D$ ist beispielsweise ein definierter Grenzwert für eine Menge von angelagertem Eis, z. B. der Masse und/oder des Volumens von angelagertem Eis, bei dessen Überschreiten die Windkraftanlage gedrosselt wird. Eine Drosselung beschreibt das negative Beschleunigen der Rotorblätter auf eine geringere Drehzahl. Der Schwellenwert $S_D$ kann beispielsweise empirisch ermittelt werden. Eine Drosselung von Rotorblättern muss beispielsweise erfolgen, wenn eine schnellere Rotation der Rotorblätter zu Schäden führen würde.

Ferner wird eine Bedingung für das Abschalten einer Windkraftanlage durch eine den Betrieb beeinträchtigende Menge an angelagertem Eis durch einen Schwellenwert $S_A$, der für die Systemgröße S geeignet ist, festgelegt. Der Schwellenwert $S_A$ ist beispielsweise ein definierter Grenzwert für eine Menge von angelagertem Eis, z. B. der Masse und/oder des Volumens von angelagertem Eis, bei dessen Überschreiten eine betroffene Windkraftanlage abgeschaltet wird. Der Schwellenwert $S_A$ ist größer als der Schwellenwert $S_D$. Eine zuvor gedrosselte Anlage kann anschließend den Schwellenwert $S_A$ erreichen. Die zuvor gedrosselte Anlage wird dann abgeschaltet. Der Schwellenwert $S_A$ kann beispielsweise empirisch ermittelt werden. Das Abschalten einer Anlage muss beispielsweise erfolgen, wenn ein Fortfahren eines gedrosselten oder eines Normalzustandes der Windkraftanlage zu erheblichen Schäden und/oder Sicherheitsproblemen führen würde.

Die Wahrscheinlichkeit einer zukünftigen Drosselung und/oder Abschaltung für eine oder mehrere Windkraftanlagen richtet sich z.B. nach dem für die Anlagen vorhergesagten Eisansatz. Der Eisansatz kann auch für den Windpark prädiziert werden.

In einem Schritt 490 werden weitere, das System beeinflussende Parameter oder Rahmenbedingungen erfasst. Solche Parameter umfassen Materialspezifikationen des Rotorblatts und können des Weiteren z.B. den Standort der Anlage und/oder behördliche Regularien umfassen. Die Parameter können in Form von Schwellenwerten in das System einfließen. Diese Parameter werden in die Berechnung der Wahrscheinlichkeit zum Drosseln und/oder Abschalten der Anlage miteinbezogen. Die Wahrscheinlichkeit zum Drosseln und/oder Abschalten der Anlage kann hierdurch z.B. spezifiziert werden. Z.B. könnte eine behördliche Regelung das Abschalten einer Anlage bei einer geringeren Vereisungsstärke erforderlich machen als die Materialspezifikationen des Rotorblattes.

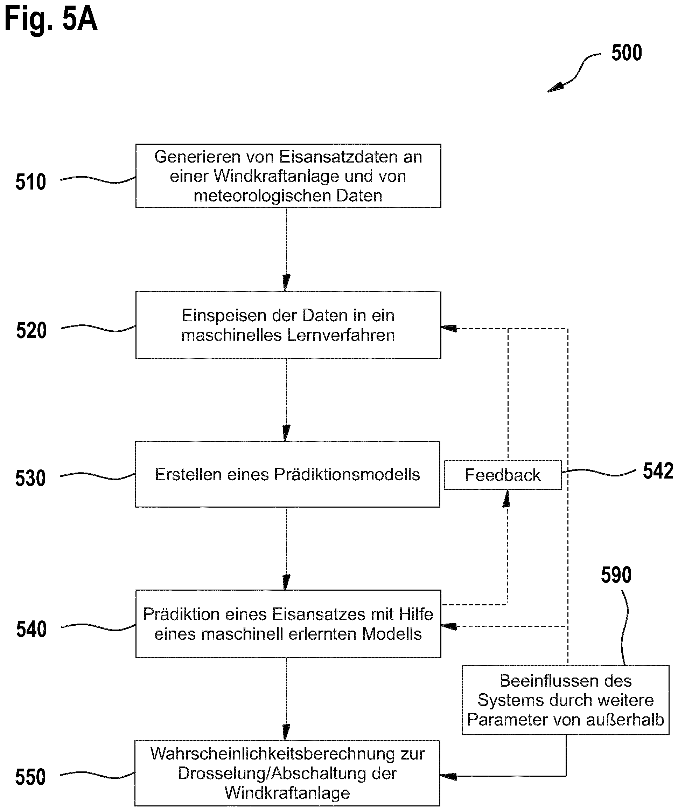

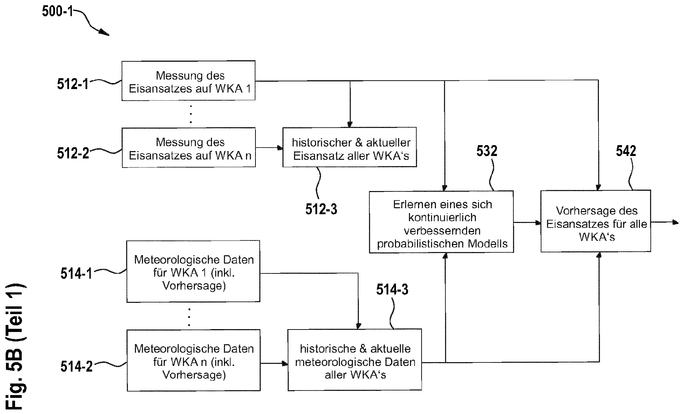

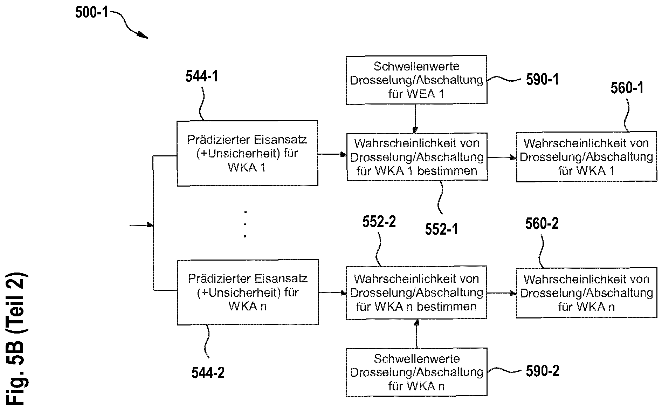

Fig. 5A zeigt ein Ablaufdiagramm eines Verfahrens 500 gemäß hier beschriebenen Ausführungsformen. Fig. 5B zeigt ein Ablaufdiagramm eines Verfahrens 500-1 gemäß hier beschriebenen Ausführungsformen.

In einem Schritt 510 des Verfahrens werden Eisansatzdaten an zumindest einer Windkraftanlage erfasst. Gemäß hier beschriebenen Ausführungsformen, kann eine Eisansatzmessung an einer oder mehrerer Windkraftanlagen erfolgen. Zum Beispiel erfolgt die Messung gemäß Schritt 512-1 des Eisansatzes an der Anlage 1. die Messung kann gemäß Schritt 512-2 auf n Windkraftanlagen erfolgen. "n" ist dabei die Anzahl der Windkraftanlagen. Beispielhaft können "n" Windkraftanlagen eines Windparks oder unterschiedlicher Windparks einbezogen werden. Es können sich gemäß Schritt 512-3 historische und aktuelle Daten für einen Eisansatz aller Windkraftanlagen ergeben. Eine Messung kann an allen Windkraftanlagen eines Windparks erfolgen. Die Messung kann an Anlagen eines oder mehrerer Windparks erfolgen. Die Messung kann mittelbar erfolgen. Die Messung kann kontinuierlich erfolgen. Die erfassten Daten können historische Daten beinhalten. Die erfassten Daten können aktuelle Daten beinhalten.

Ferner werden meteorologische Daten des Windparks, in dem sich die zumindest eine Windkraftanlage befindet, verwendet. Es können meteorologische Daten von mehreren Windparks verwendet werden, insbesondere wenn Daten des Eisansatzes an Windkraftanlagen dieser mehreren Windparks erfasst werden. Es können meteorologische Daten zu der Windkraftanlage 1, wie in Schritt 514-1 gezeigt, verwendet werden. Es können meteorologische Daten zu n Windkraftanlagen, wie in Schritt 514-2 gezeigt, verwendet werden. Die verwendeten Daten können historische Daten beinhalten. Die verwendeten Daten können aktuelle Daten beinhalten. Die verwendeten Daten können vorhergesagte meteorologische Daten enthalten.

In einem Schritt 520 werden die erfassten und verwendeten Daten in ein maschinelles Lernverfahren eingespeist. Bei den eingespeisten Daten kann es sich gemäß Ausführungsformen sowohl um die Eisansatzdaten als auch meteorologische Daten handeln. Beide Datensätze können historische, aktuelle und vorhergesagte Daten enthalten. Das maschinelle Lernverfahren kann z.B. das Lernverfahren aus einem Schritt 320 aus dem Verfahren 300 sein. Es kann ein sich kontinuierlich verbesserndes probabilistisches Modell, wie z. B. gemäß Schritt 532, erlernt werden.

In einem Schritt 530 wird ein Prädiktionsmodell erstellt. Das Prädiktionsmodell beruht auf dem maschinellen Lernverfahren. Das Lernverfahren ist ein überwachtes Lernverfahren. Aktuelle gemessene Daten können als «Lehrer» zur Eingabe korrekter Ausgabewerte zu dem Eingabewerte dienen. Dabei kann es sich um Eisansatzdaten, meteorologische Daten oder beides handeln. Eine kontinuierliche Verbesserung des Modells kann z. B. bedeuten, dass bereits vorhergesagte Daten mit den Daten abgeglichen werden, die tatsächlich an dem betreffenden Zeitpunkt in der Zukunft gemessen wurden.

In einem Schritt 540 wird ein Eisansatz mithilfe eines maschinell erlernten Modells prädiziert. Die Vorhersage des Eisansatzes kann gemäß Schritt 542 für alle Windkraftanlagen erfolgen. Die Vorhersage des Eisansatzes kann für einen Windpark erfolgen. Die Vorhersage des Eisansatzes kann für mehrere Windparks erfolgen. Es kann eine Menge an angesetzten Eis vorhergesagt werden dies kann zum Beispiel die Masse und/oder das Volumen des Eises sein. Die vorhergesagte Eismenge kann in den Schritt 520 integriert werden. Dies kann z. B. im Schritt 542 erfolgen. Wie oben beschrieben, kann der vorhergesagte Eisansatz eine Unsicherheit enthalten. Gemäß Schritt 544-1 kann bereits Ansatz für Windkraftanlage 1 vorhergesagt werden. Gemäß einem Schritt 544-2 kann ein Ansatz für n Windkraftanlagen vorhergesagt werden.

In einem Schritt 550 wird die Wahrscheinlichkeit zur Drosselung/Abschaltung der Windkraftanlage bestimmt. Zum Beispiel kann eine Wahrscheinlichkeit der Drosselung/Abschaltung für die Windkraftanlage 1 gemäß eines Schrittes 552-1 bestimmt werden. Zusätzlich kann, gemäß eines Schrittes 552-2, die Wahrscheinlichkeit der Drosselung/Abschaltung für n Windkraftanlagen bestimmt werden. Die Drosselung und/oder Abschaltung der Windkraftanlagen kann sich nach dem aktuellen Eisansatz richten. Ferner kann sich die Drosselung und/oder Abschaltung nach dem vorhergesagten Eisansatz richten. Die Drosselung und/oder Abschaltung kann sich nach beidem richten.

In einem Schritt 560-1 wird die Wahrscheinlichkeit der Drosselung/Abschaltung für die Windkraftanlage 1 erhalten. Zusätzlich wird in einem Schritt 560-2 die Wahrscheinlichkeit für die Drosselung/Abschaltung für n Windkraftanlagen erhalten. Aus diesem Wahrscheinlichkeiten, kann eine Ertragsprognose gemacht werden. Eine genaue Ertragsprognose ist wichtig, um die Leistung einer Windkraftanlage, eines Windparks und/oder mehrerer Windparks vorausberechnen zu können.

Die Wahrscheinlichkeitsberechnung aus Schritt 550 kann durch weitere Parameter von außerhalb beeinflusst werden. Aus diesem können sich Schwellenwerte für z. B. Eismengen ableiten lassen. Weitere Parameter können zum Beispiel behördliche Regularien sein. Gemäß eines Schrittes 590-1 können Schwellenwerte existieren, die die Drosselung/Abschaltung der Windkraftanlage 1 beeinflussen. Gemäß eines Schrittes 590-2 können ferner Schwellenwerte existieren, die die Drosselung/Abschaltung von n Windkraftanlagen beeinflussen. Diese Parameter können in das Lernverfahren einfließen. Ferner können diese Parameter in die Prädiktion eines Eisansatzes einfließen.

Wie bereits im Zuge des Schrittes 520 angedeutet, können die vorhergesagten als auch die aktuell gemessenen Eisansatzdaten wiederum in das überwachte Lernverfahren durch ein Feedback 542 eingespeist werden.

Die berechnete Wahrscheinlichkeit zum Drosseln und/oder Abschalten der Windkraftanlage, kann dazu verwendet werden, eine Ertragsprognose zu erstellen. Die Ertragsprognose kann für mehrere Windparks gelten insbesondere kann sie für einen Windpark gelten. Ferner kann eine Ertragsprognose für mehrere Windkraftanlagen gültig sein insbesondere für eine Windkraftanlage. Eine Ertragsprognose kann durch die Vorhersagen stetig verbessert und spezifiziert werden.

Im Vergleich zu rein auf meteorologischen Daten basierenden Ertragsprognosen, kann der Eisansatz explizit in die Betrachtung einbezogen werden. Dies ermöglicht eine deutlich genauere Prognose von Stillstandzeiten aufgrund von Eisansatz an Windkraftanlagen. Im Vergleich zur Eisvorhersage basierend auf rein meteorologischen Daten ergibt sich ein Vorteil aus der Messung der tatsächlichen Vereisung auf den Windkraftanlagen. Einerseits erlaubt dies eine kontinuierliche Verbesserung der Vorhersage. Andererseits ist hierdurch der aktuelle Vereisungszustand genau bekannt was eine genauere Prognose erlaubt da die zukünftige Veränderung des Eisansatzes stark vom aktuellen Vereisungszustand der Rotorblätter abhängen kann. Des Weiteren kann mit diesem Verfahren der Zusammenhang in der Eisbildung zwischen verschiedenen Anlagen ermittelt werden. So kann es z.B. innerhalb eines Parks Anlagen geben die immer zuerst vereisen weil sie exponierter stehen oder Anlagen eines Windparks vereisen bevor Anlagen eines anderen Parks vereisen (je nach Großwetterlage).

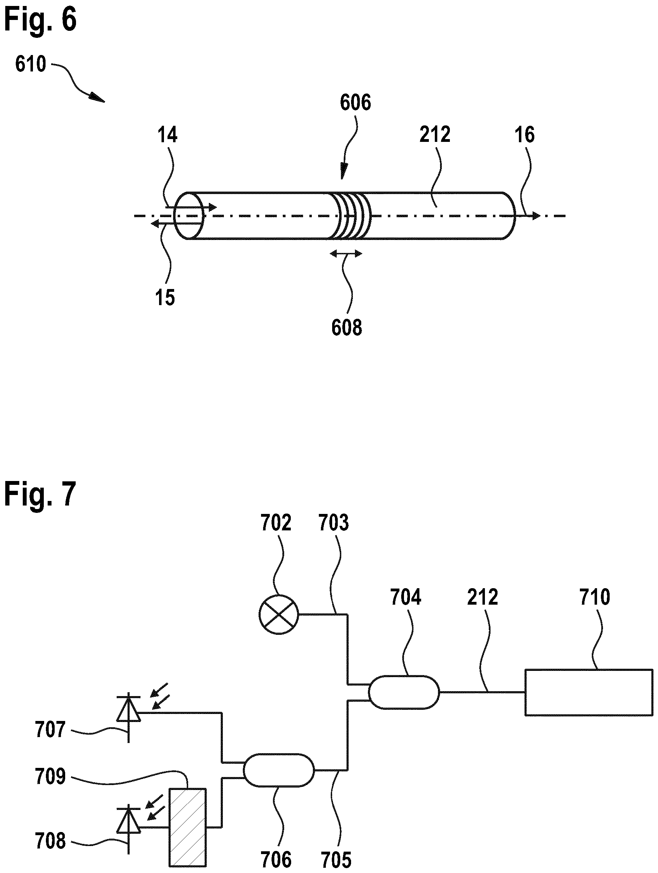

Fig. 6 zeigt schematisch einen Lichtleiter mit einem Faser-Bragg-Gitter zur Verwendung in Sensoren gemäß hier beschriebenen Ausführungsformen.

Fig. 6 zeigt einen in einen Lichtwellenleiter integrierten Sensor bzw. einen faseroptischen Sensor 610, welche ein Faser-Bragg-Gitter 606 aufweist. Obwohl in Fig. 5 nur ein einziges Faser-Bragg-Gitter 606 gezeigt ist, ist zu verstehen, dass die vorliegende Erfindung nicht auf eine Datenerfassung aus einem einzelnen Faser-Bragg-Gitter 606 beschränkt ist, sondern dass längs eines Lichtleiters 212, einer Übertragungsfaser, einer Sensorfaser bzw. einer optischen Faser eine Vielzahl von Faser-Bragg-Gittern 606 angeordnet sein können.

Fig. 6 zeigt somit nur einen Abschnitt eines optischen Wellenleiters, welcher als Sensorfaser, optischer Faser bzw. Lichtleiter 212 ausgebildet ist, wobei diese Sensorfaser empfindlich auf eine Faserdehnung (siehe Pfeil 608) ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 606, d.h. eine so genannte Bragg-Wellenlänge λB, wird durch die folgende Gleichung erhalten:

$$\lambda B = 2 \cdot nk \cdot \Lambda.$$

Hierbei ist nk die effektive Brechzahl des Grundmodus des Kerns der optischen Faser und Λ die räumliche Gitterperiode (Modulationsperiode) des Faser-Bragg-Gitters 606.

Eine spektrale Breite, die durch eine Halbwertsbreite der Reflexionsantwort gegeben ist, hängt von der Ausdehnung des Faser-Bragg-Gitters 606 längs der Sensorfaser ab. Die Lichtausbreitung innerhalb der Sensorfaser bzw. des Lichteiters 212 ist somit durch die Wirkung des Faser-Bragg-Gitters 606 beispielsweise abhängig von Kräften, Momenten und mechanischen Spannungen sowie Temperaturen, mit der die Sensorfaser, d.h. die optische Faser und insbesondere das Faser-Bragg-Gitter 606 innerhalb der Sensorfaser beaufschlagt werden.

Wie in Fig. 6 gezeigt, tritt elektromagnetische Strahlung 14 oder Primärlicht von links in die optische Faser bzw. den Lichtleiter 212 ein, wobei ein Teil der elektromagnetischen Strahlung 14 als ein transmittiertes Licht 16 mit einem im Vergleich zur elektromagnetischen Strahlung 14 veränderten Wellenlängenverlauf austritt. Ferner ist es möglich, reflektiertes Licht 15 am Eingangsende der Faser (d.h. an dem Ende, an welchem auch das elektromagnetische Strahlung 14 eingestrahlt wird) zu empfangen, wobei das reflektierte Licht 15 ebenfalls eine modifizierte Wellenlängenverteilung aufweist. Das optische Signal, das zur Detektion und Auswertung verwendet wird, kann gemäß den hier beschriebenen Ausführungsformen durch das reflektiert Licht, durch das transmittierte Licht, sowie eine Kombination der beiden zur Verfügung gestellt werden.

In einem Fall, in dem die elektromagnetische Strahlung 14 bzw. das Primärlicht in einem breiten Spektralbereich eingestrahlt wird, ergibt sich in dem transmittierten Licht 16 an der Stelle der Bragg-Wellenlänge ein Transmissionsminimum. In dem reflektierten Licht ergibt sich an dieser Stelle ein Reflexionsmaximum. Eine Erfassung und Auswertung der Intensitäten des Transmissionsminimums bzw. des Reflexionsmaximums, oder von Intensitäten in entsprechenden Wellenlängenbereichen erzeugt ein Signal, das im Hinblick auf die Längenänderung der optischen Faser bzw. des Lichtleiters 212 ausgewertet werden kann und somit auf Kräfte bzw. Vibrationen Aufschluss gibt.

Fig. 7 zeigt ein typisches Messsystem zur Auswertung von faseroptischen u.a. Beschleunigungssensoren. Das System weist eine Quelle 702 für elektromagnetische Strahlung, zum Beispiel eine Primärlichtquelle, auf. Die Quelle dient zur Bereitstellung von optischer Strahlung mit welcher mindestens ein faseroptisches Sensorelement eines Sensors, zum Beispiel eines Beschleunigungssensors, bestrahlt werden kann. Zu diesem Zweck ist eine optische Übertragungsfaser bzw. ein Lichtleiter 703 zwischen der Primärlichtquelle 702 und einem ersten Faserkoppler 704 bereitgestellt. Der Faserkoppler koppelt das Primärlicht in die optische Faser bzw. dem Lichtleiter 212. Die Quelle 702 kann zum Beispiel eine Breitbandlichtquelle, ein Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das faseroptische Sensorelement 710, wie zum Beispiel ein Faser-Bragg-Gitter (FBG) oder ein optischer Resonator, ist in eine Sensorfaser integriert bzw. an die Sensorfaser optisch angekoppelt. Das von den faseroptischen Sensorelementen zurückgeworfene Licht wird wiederum über den Faserkoppler 704 geleitet, welcher das Licht über die Übertragungsfaser 705 einen Strahlteiler 706 leitet. Der Strahlteiler 706 teilt das zurückgeworfene Licht zur Detektion mittels eines ersten Detektors 707 und eines zweiten Detektors 708. Hierbei wird das auf dem zweiten Detektor 708 detektierte Signal zunächst mit einem optischen Kantenfilter 709 gefiltert.

Durch den Kantenfilter 709 kann eine Verschiebung der Braggwellenlänge am FBG bzw. eine Wellenlängenänderung durch den optischen Resonator detektiert werden. Im Allgemeinen kann ein Messsystem, wie es in Fig. 6 dargestellt ist, ohne den Strahlteiler 706 bzw. den Detektor 707 zur Verfügung gestellt sein. Der Detektor 707 ermöglicht jedoch eine Normierung des Messsignals des Beschleunigungssensors in Bezug auf anderweitige Intensitätsfluktuationen, wie zum Beispiel Schwankungen der Intensität der Quelle 702, Schwankungen durch Reflexionen an Schnittstellen zwischen einzelnen Lichtleitern, oder andere Intensitätsschwankungen. Diese Normierung verbessert die Messgenauigkeit und reduziert die Abhängigkeit von Messsystemen von der Länge der zwischen der Auswerteeinheit und dem faseroptischen Sensor zur Verfügung gestellten Lichtleiter.

Insbesondere bei der Verwendung von mehreren FBGs können zusätzliche optische Filtereinrichtungen (nicht dargestellt) für die Filterung des optischen Signales bzw. Sekundärlichts verwendet werden. Eine optische Filtereinrichtung 709 bzw. zusätzliche optische Filtereinrichtungen können einen optischen Filter umfassen, der gewählt ist aus der Gruppe, welche besteht aus einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

**Patentansprüche**

1. Verfahren einer Prädiktion von Eisansatz an Windkraftanlagen, umfassend:

Erfassen von aktuellen Eisansatzdaten an zumindest einer Windkraftanlage, wobei die aktuellen Eisansatzdaten mittels zumindest einem Vibrationssensor oder zumindest einem Beschleunigungssensor ermittelt werden;
Verwenden von aktuellen und historischen meteorologischen Daten für den Standort der zumindest einen Windkraftanlage;
Verwenden der aktuellen Eisansatzdaten und von historischen Eisansatzdaten;
Prädiktion eines Eisansatzes basierend auf einem maschinell erlernten Modell, wobei die Prädiktion des Eisansatzes eine Unsicherheit beinhaltet;
**dadurch gekennzeichnet, dass** das Verfahren weiterhin die Schritte umfasst:

Vorhersagen einer Wahrscheinlichkeit zu einem Drosseln und/oder einem Abschalten der zumindest einen Windkraftanlage, wobei die Wahrscheinlichkeit zum Drosseln und/oder Abschalten der zumindest einen Windkraftanlage sich nach dem für die zumindest eine Windkraftanlage vorhergesagten Eisansatz richtet,

wobei der Schritt des Vorhersagens der Wahrscheinlichkeit zum Drosseln und/oder Abschalten der zumindest einen Windkraftanlage umfasst,

dass die mindestens eine Windkraftanlage gedrosselt wird, wenn der vorhergesagte Eisansatz an der mindestens einen Windkraftanlage einen Schwellenwert $S_D$ erreicht, dass die mindestens eine Windkraftanlage abgeschaltet wird, wenn der vorhergesagte Eisansatz an der mindestens einen Windkraftanlage einen Schwellenwert $S_A$ erreicht, wobei der Schwellenwert $S_A$ größer ist als der Schwellenwert $S_D$, und

dass weitere Parameter in die Vorhersage der Wahrscheinlichkeit zum Drosseln und/oder Abschalten der zumindest einen Windkraftanlage miteinbezogen werden, wobei die weiteren Parameter Materialspezifikationen des Rotorblatts umfassen.

2. Verfahren nach Anspruch 1, wobei eine Wahrscheinlichkeit einer Drosselung und/oder einer Abschaltung basierend auf der Prädiktion des Eisansatzes und auf standortbedingten Rahmenbedingungen berechnet wird.

3. Verfahren nach Anspruch 1, wobei das maschinell erlernte Modell nach einem Verfahren zur Erstellung eines Prädiktionsmodells von Eisansatz an Windkraftanlagen erstellt ist, welches Verfahren Folgendes umfasst:

Erfassen von aktuellen Eisansatzdaten an zumindest einer Windkraftanlage, wobei die aktuellen Eisansatzdaten mittels zumindest einem Vibrationssensor oder zumindest einem Beschleunigungssensor ermittelt werden;
Verwenden von aktuellen und historischen meteorologischen Daten für den Standort der zumindest einen Windkraftanlage, wobei die aktuellen und historischen meteorologischen Daten mindestens zwei der Folgenden umfassen: Windgeschwindigkeit, Windrichtung, Temperatur, Luftfeuchte, Luftdruck und/oder weitere wetterbezogene Parameter;
Einspeisen der aktuellen Eisansatzdaten und von historischen Eisansatzdaten der zumindest einen Windkraftanlage und Einspeisen der aktuellen und historischen meteorologischen Daten in ein maschinelles Lernverfahren; und
Erstellen eines Prädiktionsmodells basierend auf dem maschinellen Lernverfahren.

4. Verfahren nach einem der Ansprüche 1 bis 3, wobei die meteorologischen Daten vorhergesagte meteorologische Daten enthalten.

5. Verfahren nach Anspruch 1, wobei eine Vereisungsstärke mit der Prädiktion vorhergesagt wird.

6. Verwendung des Verfahrens nach einem der Ansprüche 1 bis 5 zum Erstellen einer Ertragsprognose für Windparks, insbesondere für die zumindest eine Windkraftanlage.

**Claims**

1. A method for forecasting ice buildup on wind turbines, comprising:

recording current ice buildup data on at least one wind turbine, the current ice buildup data being determined by means of at least one vibration sensor or at least one acceleration sensor;
using current and historical meteorological data for the location of at least one wind turbine;
using current ice buildup data and historical ice buildup data; forecasting ice buildup based on a machine-learned model, where the forecasting of ice buildup includes uncertainty;
**characterized in that** the method further comprises the steps:

forecasting a probability of throttling and/or shutdown of the at least one wind turbine, wherein the probability of throttling and/or shutdown of the at least one wind turbine is based on the forecast ice buildup for the at least one wind turbine,
wherein, in the step of forecasting the probability of throttling and/or shutdown of the at least one wind turbine,
the at least one wind turbine is throttled when the forecast ice buildup on the at least one wind turbine reaches a threshold value $S_D$,
the at least one wind turbine is switched off when the forecast ice buildup on the at least one wind turbine reaches a threshold value $S_A$, the threshold value $S_A$ being greater than the threshold value $S_D$, and
further parameters are included in the forecast of the probability of throttling and/or shutdown of the at least one wind turbine, the further parameters including material specifications of the rotor blade.

2. The method according to claim 1, wherein a probability of throttling and/or shutdown is calculated based on the prediction of ice buildup and on site-specific basic conditions.

3. The method according to claim 1, wherein the machine-learned model is created according to a method for creating a forecasting model of ice buildup on wind turbines, which method comprises the following:

recording current ice buildup data on at least one wind turbine, the current ice buildup data being determined by means of at least one vibration sensor or at least one acceleration sensor;
using current and historical meteorological data for the location of the at least one wind turbine, the current and historical meteorological data including at least two of the following: wind speed, wind direction, temperature, humidity, air pressure, and/or other weather-related parameters;
feeding the current ice buildup data and historical ice buildup data of at least one wind turbine and feeding the current and historical meteorological data into a machine learning process; and
creating a forecasting model based on the machine learning process.

4. The method according to any one of claims 1 to 3, wherein the meteorological data include forecast meteorological data.

5. The method according to claim 1, wherein an icing severity is predicted with the forecast.

6. A use of the method according to any one of claims 1 to 5 for preparing a yield forecast for wind farms, in particular for at least one wind turbine.

## Revendications

1. Procédé permettant de prédire une formation de givre sur des éoliennes, comprenant les étapes consistant à :

détecter des données de formation de givre actuelles au niveau d'au moins une éolienne, les données de formation de givre actuelles étant établies au moyen d'au moins un capteur de vibration ou d'au moins un capteur d'accélération ;
utiliser des données météorologiques actuelles et historiques pour le site de ladite au moins une éolienne ;
utiliser les données de formation de givre actuelles et des données de formation de givre historiques ; prédire une formation de givre sur la base d'un modèle obtenu par apprentissage machine, dans lequel la prédiction de la formation de givre contient une incertitude ;
**caractérisé en ce que** le procédé comprend en outre les étapes consistant à :

prédire une probabilité d'une restriction et/ou d'un arrêt de ladite au moins une éolienne,
dans lequel la probabilité d'une restriction et/ou d'un arrêt de ladite au moins une éolienne dépend de la formation de givre prédite pour ladite au moins une éolienne,
dans lequel l'étape de prédiction de la probabilité d'une restriction et/ou d'un arrêt de ladite au moins une éolienne comprend le fait
que ladite au moins une éolienne soit restreinte si la formation de givre prédite au niveau de ladite au moins une éolienne atteint une valeur seuil $S_D$,
que ladite au moins une éolienne soit arrêtée si la formation de givre prédite au niveau de ladite au moins une éolienne atteint une valeur seuil $S_A$, la valeur seuil $S_A$ étant supérieure à la valeur seuil $S_D$, et
que d'autres paramètres soient incorporés dans la prédiction de la probabilité d'une restriction et/ou d'un arrêt de ladite au moins une éolienne, les autres paramètres comprenant des spécifications des matériaux de la pale de rotor.

2. Procédé selon la revendication 1, dans lequel une probabilité d'une restriction et/ou d'un arrêt est calculée sur la base de la prédiction de la formation de givre et sur des conditions fondamentales dues au site.

3. Procédé selon la revendication 1, dans lequel le modèle obtenu par apprentissage machine est créé selon un procédé de création d'un modèle de prédiction de la formation de givre sur des éoliennes, lequel procédé comprend les étapes consistant à :

détecter des données de formation de givre actuelles au niveau d'au moins une éolienne, les données de formation de givre actuelles étant établies au moyen d'au moins un capteur de vibration ou d'au moins un capteur d'accélération ;
utiliser des données météorologiques actuelles et historiques pour le site de ladite au moins une éolienne, les données météorologiques actuelles et historiques comprenant au moins deux des éléments suivants : la vitesse du vent, la direction du vent, la température, l'humidité de l'air, la pression atmosphérique et/ou d'autres paramètres liés à la météo ;

entrer les données de formation de givre actuelles et des données de formation de givre historiques de ladite au moins une éolienne, et entrer les données météorologiques actuelles et historiques dans un procédé d'apprentissage machine ; et

créer un modèle de prédiction sur la base du procédé d'apprentissage machine.

4. Procédé selon l'une quelconque des revendications 1 à 3, dans lequel les données météorologiques contiennent des données météorologiques prédites.

5. Procédé selon la revendication 1, dans lequel une épaisseur de givre est prédite par la prédiction.

6. Utilisation du procédé selon l'une quelconque des revendications 1 à 5 permettant de créer un pronostic de rendement pour des parcs d'éoliennes, en particulier pour ladite au moins une éolienne.

**Fig. 1A**

10

10                                          10

**Fig. 1B**

10

200

200                                         200

# Fig. 2A

# Fig. 2B

# Fig. 3

300

310 — Generieren von Eisansatzdaten an einer Windkraftanlage und von meteorologischen Daten

320 — Einspeisen der Daten in ein maschinelles Lernverfahren

330 — Erstellen eines Prädiktionsmodells

**Fig. 4**

400

410 — ⌇ Generieren von Eisansatzdaten an
einer Windkraftanlage und von
meteorologischen Daten

420 — ⌇ Prädiktion eines Eisansatzes mit Hilfe
eines maschinell erlernten Modells

490

430 — ⌇ Wahrscheinlichkeitsberechnung zur
Drosselung/Abschaltung der
Windkraftanlage

Beeinflussen des Systems
durch weitere Parameter von
außerhalb

# Fig. 5A

500

510 — Generieren von Eisansatzdaten an einer Windkraftanlage und von meteorologischen Daten

520 — Einspeisen der Daten in ein maschinelles Lernverfahren

530 — Erstellen eines Prädiktionsmodells

Feedback — 542

540 — Prädiktion eines Eisansatzes mit Hilfe eines maschinell erlernten Modells

590

Beeinflussen des Systems durch weitere Parameter von außerhalb

550 — Wahrscheinlichkeitsberechnung zur Drosselung/Abschaltung der Windkraftanlage

**Fig. 5B (Teil 1)**

500-1

512-1 — Messung des Eisansatzes auf WKA 1

512-2 — Messung des Eisansatzes auf WKA n

512-3 — historischer & aktueller Eisansatz aller WKA's

532 — Erlernen eines sich kontinuierlich verbessernden probabilistischen Modells

542 — Vorhersage des Eisansatzes für alle WKA's

514-1 — Meteorologische Daten für WKA 1 (inkl. Vorhersage)

514-2 — Meteorologische Daten für WKA n (inkl. Vorhersage)

514-3 — historische & aktuelle meteorologische Daten aller WKA's

**Fig. 5B (Teil 2)**

500-1

544-1

| Prädizierter Eisansatz (+Unsicherheit) für WKA 1 |
|---|

| Schwellenwerte Drosselung/Abschaltung für WEA 1 |
|---|

590-1

560-1

| Wahrscheinlichkeit von Drosselung/Abschaltung für WKA 1 bestimmen |
|---|

| Wahrscheinlichkeit von Drosselung/Abschaltung für WKA 1 |
|---|

552-2    552-1

560-2

| Prädizierter Eisansatz (+Unsicherheit) für WKA n |
|---|

| Wahrscheinlichkeit von Drosselung/Abschaltung für WKA n bestimmen |
|---|

| Wahrscheinlichkeit von Drosselung/Abschaltung für WKA n |
|---|

544-2

| Schwellenwerte Drosselung/Abschaltung für WKA n |
|---|

590-2

# Fig. 6

610

14    606    212    16

15    608

# Fig. 7

702    703

704    212    710

707

709

708

706    705

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005016524 A1
- US 20120226485 A1
- US 20140244188 A1
- CN 103603776 B
- US 2017058871 A1